Europäisches Patentamt

(19) European Patent Office

Office européen des brevets

(11) Veröffentlichungsnummer: **0 305 912**
**B1**

(12) **EUROPÄISCHE PATENTSCHRIFT**

(45) Veröffentlichungstag der Patentschrift:
19.12.90

(51) Int. Cl.⁵: **C02F 1/72**, C02F 1/58

(21) Anmeldenummer: 88113910.9

(22) Anmeldetag: 26.08.88

(54) Verfahren zur Behandlung übelriechender schwefelhaltiger Abwässer.

(30) Priorität: 02.09.87 DE 3729224

(43) Veröffentlichungstag der Anmeldung:
08.03.89 Patentblatt 89/10

(45) Bekanntmachung des Hinweises auf die Patenterteilung:
19.12.90 Patentblatt 90/51

(84) Benannte Vertragsstaaten:
BE CH DE FR GB IT LI NL

(56) Entgegenhaltungen:
EP-A- 0 001 792
DE-A- 3 224 260
DE-B- 1 061 703
DE-C- 972 284

(73) Patentinhaber: BASF Aktiengesellschaft,
Carl-Bosch-Strasse 38, D-6700 Ludwigshafen(DE)

(72) Erfinder: Baur, Karl-Gerhard, Dr., Ottwellerstrasse 22,
D-6700 Ludwigshafen(DE)
Erfinder: Menger, Volkmar, Dr., Pfalzgrafenstrasse 33,
D-6730 Neustadt(DE)
Erfinder: Etzrodt, Heinz, Dr., Bruesseler Ring 44,
D-6700 Ludwigshafen(DE)

## Beschreibung

Die vorliegende Erfindung betrifft ein Verfahren zur Desodorierung von Abwässern, welche durch organische Schwefelverbindungen einen üblen Geruch aufweisen.

Durch den Gehalt an Schwefelverbindungen übelriechende Abwässer können normalerweise nicht ohne Vorbehandlung in das Abwasser eingeleitet werden.

Aus der Literatur sind zahlreiche Verfahren bekannt, mittels derer $H_2S$- bzw. sulfid- und mercaptanhaltige Abwässer aufgearbeitet werden. In vielen Fällen geschieht dies durch Umsetzung mit hypochlorithaltigen wäßrigen Lösungen.

Beispielsweise (Derwent-Abstract J 5 5035-914) wird einem Abwasser, das anorganische Sulfide enthält, bei Temperaturen über 70°C NaOCl zudosiert, bis die Lösung eine gelb-grüne Färbung annimmt. Auf diese Weise wird das gesamte Sulfid zum Sulfat oxidiert.

Grundsätzlich hat die Oxidation mittels hypochlorithaltiger Lösungen jedoch den Nachteil, daß das in eine Kläranlage oder einen Vorfluter abfließende Abwasser zusätzlich eine chloridhaltige Salzfracht beinhaltet.

Die Oxidation von in Abwässern gelösten Metallsulfiden und Mercaptanen gelingt mit Hypochlorit. Die vollständige Dekontamination von Abwässern, die mit organischen Schwefelverbindungen wie Thioethern, Disulfiden etc. beladen sind, gestaltet sich jedoch schwieriger. Die Anzahl der in der Literatur vorgeschlagenen Verfahren hierzu ist daher auch weitaus kleiner.

Bei Abwässern, die Thioether oder Thioetherderivate enthalten, gelingt die Dekontamination mittels Hypochloriten oft nicht vollständig oder benötigt zumindest größere Verweilzeiten.

Beispielsweise (Derwent-Abstract J 4 8104-350) wird zu einem Abwasser einer Methioninanlage NaCl und NaOCl gegeben und die Flüssigkeit dann bei 100°C und 3 Stunden Verweilzeit behandelt.

Viele dieser Verfahren bringen gravierende Nachteile mit sich. So ist beispielsweise (Patent EP-42 331) die Verbrennung verdünnter, übelriechender Abwässer zwar wirksam, sie verbraucht aber sehr viel Energie und ist technisch aufwendig. Letzteres gilt vor allem dann, wenn die zu verbrennenden Abwässer anorganische Bestandteile, wie z.B. Carbonate oder Sulfate, enthalten, die im Verbrennungsofen zu Verbackungen bzw. Verstopfungen führen können.

Es sind Verfahren zur Dekontaminierung von Abwässern, bei denen ungebräuchlichere Reagentien, wie Natriumchlorit (DOS 2 223 790) oder Ozon (SU 757-477) eingesetzt werden, bekannt. Diese sind für eine Großanlage aus Gründen des Umweltschutzes oder der Energieaufwendung weniger attraktiv.

Natriumchlorit muß aufwendig aus Natriumchlorat hergestellt werden und bedingt eine Salzfracht im behandelten Abwasser. Ozon kommt wegen der hohen Energiekosten für eine technische Anlage häufig kaum in Frage.

Die Naßoxidation von Abwässern, die außer Mercaptanen schwerer oxidierbare Schwefelverbindungen enthalten, mit Sauerstoff unter erhöhten Temperaturen und Drucken versagt hier völlig.

Die Behandlung der vorgenannten Abwässer unter Einsatz von Wasserstoffperoxid liefert ebenfalls keine befriedigenden Ergebnisse.

Der Erfindung lag daher die Aufgabe zugrunde, Abwässer, die Organoschwefelverbindungen enthalten, unter Einsatz von gängigen und leicht verfügbaren Industriechemikalien derart zu behandeln, daß eine völlige Befreiung von üblem Geruch einerseits erreicht, ohne daß andererseits aufgrund solcher Zusätze ein neues Abwasserproblem erzeugt wird.

Es wurde gefunden, daß diese Aufgabe dadurch gelöst werden kann, daß man das Abwasser unter einem Druck von 2 bis 100 bar, vorzugsweise von 5 bis 50 bar, und bei Temperaturen zwischen 100°C bis 300°C, vorzugsweise 150°C bis 250°C, unter Zugabe von Salpetersäure in einer diskontinuierlich oder vorteilhaft kontinuierlich arbeitenden Apparatur behandelt.

Die hierzu nötige Konzentration an freier Salpetersäure im Abwasser liegt erfindungsgemäß bei 1 - 30 Gew.%, vorzugsweise bei 2 - 10 Gew.%.

Die behandelten Abwässer können in erster Linie oxidierbare Schwefelverbindungen wie Mercaptane, insbesonder aber Thioether, Disulfide und schwefelhaltige Aminosäuren enthalten.

Bekannt ist, daß Organoschwefelverbindungen, wie Mercaptane, Thioether und Disulfide, mit Salpetersäure zu Sulfonsäuren, Sulfoxiden und Sulfonen oxygeniert werden können.

Diese Oxidationen werden üblicherweise mit Salpetersäure einer Konzentration von mehr als 30 %, meistens sogar mit konzentrierter $HNO_3$, bei Normaldruck durchgeführt (siehe O. Buddenberg in Houben-Weyl, Methoden der organischen Chemie, Bd. 4/1a, S. 735 - 744, Georg Thieme Verlag, Stuttgart, 1981, sowie A. Schöberl u. A. Wagner, ibid., Bd. 9, S. 214 und M. Quadvlieg, ibid., Bd. 9, S. 370).

Entgegen diesen literaturbekannten Befunden wurde gefunden, daß ein Abwasser der oben genannten Art durch Behandlung mit verdünnter Salpetersäure in einer Konzentration von nur 1 - 30 Gew.% nach der oben beanspruchten Verfahrensweise keinen für Schwefelverbindungen typischen unangenehmen Geruch mehr aufweist.

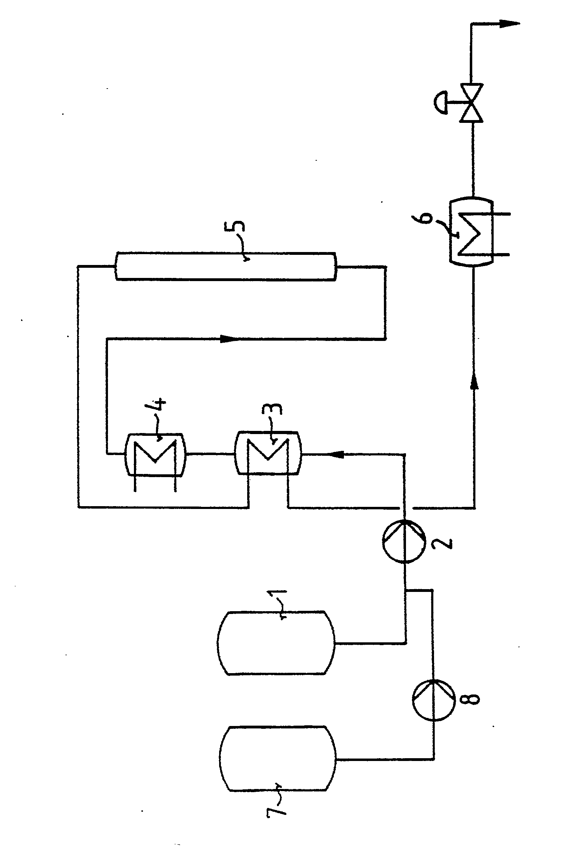

Die Erfindung wird nachstehend anhand der Zeichnung erläutert.

Das zu behandelnde Abwasser wird in einer Vorlage 1 vorgelegt, dann unter Druck (Druckerhöhungspumpe 2) durch einen Wärmetauscher 3 (Vorheizer), einen Nachheizer 4, einen Rohrreaktor 5 zurück über den Wärmetauscher 3 (Kühler) über einen Kühler 6 gefahren und schließlich in das Abwasser entspannt. Dem Abwasserstrom wird vor der thermischen Behandlung aus einer Vorlage 7 mittels einer Dosierpumpe 8 die erforderliche Menge Salpetersäure zudosiert.

Als Oxidationsmittel wird eine handelsübliche Salpetersäure mit einer Konzentration von beispielsweise 60 Gew.% verwendet und mit dem zu behandelnden Abwasser vorgemischt oder aus der Vorlage 7 entnommen und mittels der Pumpe 8 dem Abwasserstrom, der in den Wärmetauscher 3 gefahren wird, zudosiert.

Die Wärmetauscher 3 und 6, der Nachheizer 4 sowie der Rohrreaktor 5 sind, sofern Temperaturen über 150°C angewendet werden, aus Titan oder einem vergleichbar beständigen Werkstoff gefertigt. Dies ist bekanntermaßen bei Verwendung von Salpetersäure unter höherer Temperatur und erhöhtem Druck erforderlich.

Der Wärmetauscher 3 und der Rohrreaktor 5 werden im Temperaturbereich von 100°C - 300°C, vorzugsweise von 150°C - 250°C, betrieben. Bei der oxidativen Behandlung der Abwässer stellen sich bei diesen Temperaturen Drucke von 2 - 100 bar ein. Die Verweilzeiten im Rohrreaktor 5 betragen 1 - 15 Minuten, vorzugsweise 2 - 5 Minuten.

Die benötigte Menge an Salpetersäure richtet sich nach der Menge und Oxidationsstufe der zu oxidierenden Verbindungen und nach den Oxidationsstufen der Endprodukte. Dem Abwasser wird unter sonst unveränderten Reaktionsbedingungen so lange Salpetersäure zugesetzt, bis der Reaktoraustrag völlig geruchlos ist.

Vor dem Geruchstest wird die Austragsprobe wegen der Anwesenheit saurer Gase mit verdünnter Natronlauge neutralisiert.

Zur Beurteilung der Wirksamkeit der Abwasserbehandlung ist ein Geruchstest völlig ausreichend. Analytische Untersuchungen sind bei den extrem niedrigen Konzentrationen von Schwefelverbindungen, die noch Geruchsbelästigungen erzeugen, vergleichsweise aufwendig.

Der geruchslose Reaktoraustrag kann z.B. in das behandlungsbedürftige Abwasser eingeleitet werden.

Das Verfahren erweist sich als besonders geeignet für die Behandlung extrem stark und unangenehm riechender Abwässer aus einer technischen Methioninanlage.

Als Modell für solche Abwässer können folgende Lösungen dienen:

1. Eine wäßrige Lösung mit 1,0 Gew.% β-Methylmercaptopropionaldehyd
2. Eine wäßrige Lösung mit 1,0 Gew.% β-Methylmercaptopropionaldehyd und 1,0 Gew.% DL-Methionin
3. Eine wäßrige Lösung mit 0,5 Gew.% β-Methylmercaptopropionaldehyd, 1,0 Gew.% DL-Methionin und 13 Gew.% Kaliumnitrat

Die Konzentration der Salpetersäure im Modellabwasser vor der thermischen Behandlung beträgt vorteilhaft 3 - 5 Gew.%.

Das erfindungsgemäße Reinigungsverfahren eignet sich besonders für alle Anwendungen, bei denen schwefelhaltige Abwässer anfallen, die den Schwefel in gebundener oxidierbarer Form enthalten, z.B. in chemischen Industrien, Raffinerien, Tierverwertungsanstalten etc.

Das Verfahren kann kontinuierlich in der oben beschriebenen Apparatur oder auch diskontinuierlich in dafür geeigneten Druckbehältern ausgeübt werden.

Bislang unbekannt war, daß sich Organoschwefelverbindungen, wie Thioether, Mercaptane, Disulfide und Thioaminosäuren, in sehr verdünnter, wäßriger salpetersaurer Lösung bei Temperaturen über 100°C und dem sich einstellenden Sättigungsdampfdruck bei kurzer Verweilzeit im Minutenbereich, vollständig zu geruchlosen Substanzen umsetzen lassen.

Der Vorteil des Verfahrens besteht zum einen in dem vergleichsweise geringen apparativen Aufwand, der zur Durchführung der Abwasserbehandlung notwendig ist, und zum anderen im nur geringen Bedarf an Salpetersäure.

Salpetersäure ist abgesehen vom Sauerstoff das bei weitem billigste verfügbare Oxidationsmittel.

Wird statt Salpetersäure Wasserstoffperoxid als Oxidationsmittel verwendet, werden keine befriedigenden Ergebnisse erhalten (Beispiel 4).

Die Erfindung wird anhand der folgenden Beispiele näher erläutert:

Beispiel 1

Eine wäßrige Lösung, die 1 Gew.% β-Methylmercaptopropionaldehyd und 3 Gew.% Salpetersäure enthält, wird in einer Apparatur (siehe Zeichnung) bestehend aus der Pumpenvorlage 1, der Druckerhöhungspumpe 2, dem Wärmetauscher 3 (Vorheizer), dem Nachheizer 4, dem Rohrreaktor 5, dem Wärmetauscher 6 (Kühler), bei einer Temperatur von 190°C, einem Druck von 16 bar und einer Verweilzeit von 2 Minuten behandelt.

Eine Probe des Reaktoraustrages wird zur Geruchsprüfung neutralisiert. Es ist kein Geruch mehr feststellbar.

Beispiel 2

Eine wäßrige Lösung, die 1 Gew.% β-Methylmercaptopropionaldehyd, 1 Gew.% DL-Methionin und 4,8 Gew.% Salpetersäure enthält, wird in der in Beispiel 1 beschriebenen Apparatur bei 190°C, einem Druck von 16 bar und einer Verweilzeit von 2 Minuten behandelt.

Eine Probe des Reaktoraustrages wird zur Geruchsprüfung neutralisiert. Es ist kein Geruch mehr feststellbar.

Verweilzeiten von mehr als 2 Minuten erbringen keinen weiteren Nutzen.

Beispiel 3

Eine wäßrige Lösung, die 1 Gew.% β-Methylmercaptopropionaldehyd, 1 Gew.% DL-Methionin und 4,8 Gew.% Salpetersäure enthält, wird in einem Rührautoklaven bei 190°C, einem Druck von 16 bar und einer Verweilzeit von 15 Minuten behandelt.

Eine Probe des Reaktoraustrages wird zur Geruchsprüfung neutralisiert. Es ist kein Geruch mehr feststellbar.

Beispiel 4

Eine wäßrige Lösung, die 0,5 Gew.% β-Methylmercaptopropionaldehyd, 1,0 Gew.% DL-Methionin, 4 Gew.% Salpetersäure und 13 Gew.% Kaliumnitrat enthält, wird in der in Beispiel 1 beschriebenen Apparatur bei 190°C, einem Druck von 16 bar und einer Verweilzeit von 2 Minuten behandelt. Eine Probe des Reaktoraustrages wird zur Geruchsprüfung neutralisiert. Es ist kein Geruch mehr feststellbar.

Verweilzeiten von mehr als 2 Minuten erbringen keine weiteren Nutzen.

Beispiel 5

Eine wäßrige Lösung, die 1 Gew.% β-Methylmercaptopropionaldehyd, 1 Gew.% DL-Methionin und 5,6 Gew.% Wasserstoffperoxid enthält, wird in einem Autoklaven auf 200°C aufgeheizt und bei dieser Temperatur und dem sich einstellendem Druck von 18 bar 15 Minuten lang gehalten.

Der Autoklavenaustrag riecht stark nach Organoschwefelverbindungen.

Beispiel 6

Eine wäßrige Lösung, die 1 Gew.% β-Methylmercaptopropionaldehyd enthält, wird in einem Autoklaven auf 200°C aufgeheizt und bei dieser Temperatur und einem Druck von 100 bar Sauerstoff 15 Minuten lang gehalten.

Der Autoklavenaustrag riecht stark nach Organoschwefelverbindungen.

Beispiel 7

300 ml einer wäßrigen Natriumhypochlorit-Lösung (13 % aktives Chlor) werden in einem Rührgefäß vorgelegt, langsam mit 20 g β-Methylmercaptopropionaldehyd (MMP versetzt und 30 Minuten bei Normaldruck zum Sieden erhitzt. Das Molverhältnis NaOCl zu MMP beträgt 5,7 . 1.

Der Austrag riecht stark nach Organoschwefelverbindungen.

Beispiel 8

300 ml einer 30 %igen Salpetersäure werden in einem Rührgefäß vorgelegt, mit 10 g β-Methylmercaptopropionaldehyd (MMP) versetzt und 30 Minuten bei 50°C und Normaldruck gerührt.

Der Austrag riecht nicht mehr nach Organoschwefelverbindungen. Salpetersäurekonzentrationen von weniger als 30 % erbringen keine vollständige Dekontaminierung.

Beispiel 9

Eine wäßrige Lösung, die 1 Gew.% β-Methylmercaptopropionaldehyd, 1 Gew.% DL-Methionin und 4,8 Gew.% Salpetersäure enthält, wird in einem Rührgefäß unter Rückfluß bei 101°C und unter Normaldruck 24 h lang gekocht. Eine Probe des Reaktoraustrages wird zur Geruchsprüfung neutralisiert. Selbst nach dieser langen Verweilzeit wurde keine ausreichende Desodorierung erzielt.

**Patentansprüche**

Verfahren zur Desodorierung von Abwässern, welche durch organische Schwefelverbindungen einen üblen Geruch aufweisen, dadurch gekennzeichnet, daß die Abwässer mit einer Konzentration an freier Salpetersäure von 1 - 30 Gew.%, vorzugsweise 2 - 10 Gew.%, unter einem Druck von 2 bis 100 bar, vorzugsweise von 5 bis 50 bar, und bei Temperaturen zwischen 100°C bis 300°C, vorzugsweise 150°C bis 250°C, behandelt werden.

**Claims**

A process for deodorizing wastewater having an unpleasant odor due to an organic sulfur compound, which comprises treating the wastewater with a concentration of free nitric acid of 1–30% by weight, preferably 2–10% by weight, at from 2 to 100 bar, preferably at from 5 to 50 bar, and at from 100°C to 300°C, preferably at from 150°C to 250°C.

**Revendications**

Procédé de désodorisation des eaux usées qui ont une mauvaise odeur, due à des composés sulfurés organiques, caractérisé par le fait qu'on traite les eaux usées avec une concentration en acide azotique libre de 1–30% en poids, de préférence 2–10% en poids, sous une pression de 2 à 100 bar, de préférence de 5 à 50 bar, et à des températures comprises entre 100 degrés C et 300 degrés C, de préférence de 150 degrés C à 250 degrés C.